# EUROPEAN PATENT SPECIFICATION

(11) **EP 2 070 808 B1**
(45) Date of publication and mention of the grant of the patent: **02.03.2011**
(21) Application number: 08020158.5
(22) Date of filing: 19.11.2008
(51) Int. Cl.: B62D 43/04

(54) **Unit for supporting an external spare wheel**
Einheit zum Tragen eines außen angebrachten Ersatzrades
Unité de support d'une roue de secours externe

(30) Priority: 05.12.2007 IT TO20070150 U
(43) Date of publication of application: 17.06.2009
(73) Proprietor: Proma S.r.l., 81020 San Nicola la Strada (CE) (IT)
(72) Inventor: Pino, Nicola Giorgio, 81100 San Leucio (CE) (IT)
(74) Representative: Lotti, Giorgio

(56) References cited:
- GB-A- 1 120 909
- GB-A- 2 433 060
- US-A- 4 537 431

## Description

The present innovation relates to a unit for supporting an external spare wheel.

In general, supporting units of a known type are designed to be installed on vehicles in which the spare wheel is housed on the outside of the vehicle itself and, in particular, is housed in a housing position or directly underneath a platform or floor panel of the vehicle, or else within a hollow made in the panel or platform itself, and comprise:
- a box-type bracket anchored to the panel;
- a bell, which can be coupled to the spare wheel and can be moved with respect to the bracket from and into a housing position, in which the spare wheel is set up against the panel;
- a supporting rod, which is connected to the bell and can be inserted within the box-type bracket when the spare wheel is in its housing position;
- an actuation cable passing through the bracket and having a first end fixed with respect to the supporting rod; and
- a clamping and safety device for clamping the bell in its housing position.

In supporting units of the type described above the clamping and safety device represents, in many of its known embodiments, the weak link of the entire supporting unit given that, on account of the stresses and vibrations resulting from the conditions in which the vehicle is travelling, said device is not always such as to guarantee the necessary safety in clamping of the actuation cable and consequently requires auxiliary accessories dedicated to said purpose or ones that are particularly costly to produce.

Document GB 1,120,909 discloses a vehicle spare wheel holder comprising a support rotably on an articulation point, a cable or tie to retain the support and a casing containing releasing means for said support.

Document GB 2,433,060 discloses a winch for a vehicle spare wheel, comprising an anti-rotation plate having sinusoidal ondulations and being unable to rotate relative to a housing and being based against drum of said winch by means of a spring.

The purpose of the present innovation is to provide a unit for supporting an external spare wheel that will enable clamping and completely safe positioning of the spare wheel and will likewise enable a reduction both in the number of components and in the production costs of the unit itself.

According to the present innovation, a unit for supporting an external spare wheel is provided, said unit being designed to support the spare wheel underneath a structure of the vehicle and comprising:
- a box-type bracket anchored to the structure;
- a bell, which can be coupled to the spare wheel and can move with respect to the bracket from and into a housing position, in which the spare wheel is set up against the structure;
- a supporting rod, which is connected to the bell and can be inserted within the box-type bracket when the spare wheel is in its housing position; and
- a clamping and safety device, which is designed to clamp the bell in its housing position;
said unit being characterized in that the clamping and safety device in turn comprises a pawl-and-ratchet mechanism, which is set inside the box-type bracket and can be operated from outside, and a grooved shaft with circumferential grooves, which is provided along said supporting rod of the bell and is kinematically connected to the pawl-and-ratchet mechanism to enable clamping of the spare wheel in its housing position, as well as free recovery of the spare wheel itself, and prevent, instead, any accidental descent of the spare wheel.

According to a preferred embodiment of the present innovation, in the supporting unit defined above, the pawl-and-ratchet mechanism comprises a gear, which is rotatably mounted within the box-type bracket and meshes with said grooved shaft, and a pawl, which is mounted within the box-type bracket and can be selectively operated between an active position of release, in which it is released from the gear, and a passive position of blocking, in which a first end thereof is constrained in the gear and a second end thereof is set up against the box-type bracket, preventing any release of the first end from the gear itself.

As regards again the supporting units of a known type, it should be pointed out that, in them, the bell is normally rigidly connected to the supporting rod, limiting, in effect, any possibility of adaptation of the unit to different types of spare wheels, the tyres of which normally have dimensions that cannot be known beforehand in the design stage.

Consequently, a further purpose of the present innovation is to provide a unit for supporting spare wheels that will present characteristics of maximum flexibility of use, at the same time maintaining the necessary safety requirements unaltered.

Consequently, for said purpose, preferably, the supporting unit defined above moreover comprises a connection device, which slidably connects the bell to the supporting rod and is provided with an engagement element set between a bottom end of the supporting rod and a resting edge of the bell.

Preferably, moreover, in the supporting unit defined above, the circumferential grooves of the grooved shaft are set at equal distances apart from one another with a given pitch, and said engagement element is defined by an elastic element compressed between said bottom end of the supporting rod and said resting edge of the bell.

The innovation will now be described with reference to the annexed drawings, which illustrate a non-limiting example of embodiment thereof, and in which:
- Figure 1 illustrates, in cross section and in side elevation, a first preferred embodiment of a unit for supporting an external spare wheel provided according to the present innovation; and
- Figure 2 illustrates, in cross section and in side elevation, a second preferred embodiment of the unit for supporting a spare wheel of Figure 1.

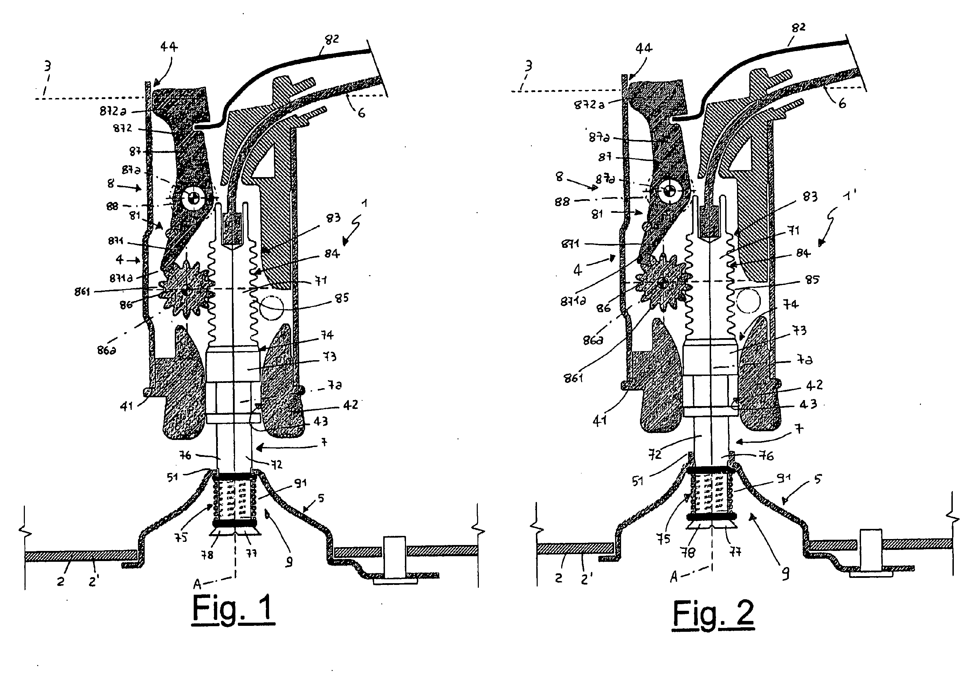

With reference to Figure 1, designated as a whole by 1 is a unit for supporting a spare wheel, which is represented schematically and designated by 2.

The unit 1 is designed to be installed underneath a structure 3 of the vehicle represented, according to the cases, by a floor panel or platform or else by a bottom wall of a hollow for housing the wheel 2 and is designed to support the wheel 2 in a housing position with the respective tyre (known and not illustrated) set up against the structure 3 itself.

The unit 1 comprises:
- a box-type bracket 4 anchored at the top to the structure 3 and having a bottom mouth 41; and
- a bell 5, which can be coupled to the spare wheel 2, being inserted through a rim 2' of the wheel 2 itself, and can be moved from the bracket 4 to release the wheel 2 from its housing position or towards the bracket 4 to reset the wheel 2 in its housing position, which also corresponds to a housing position of the bell 5 itself.

The bracket 4 has a vertical longitudinal axis A and is provided with an internal centring collar 42, which is set to provide protection within the mouth 41 and is internally delimited by a shaped passage 43, which is open like a chalice towards the inside of the bracket 4 and is chamfered towards the outside of the bracket 4 itself.

The unit 1 moreover comprises an actuation cable 6 passing through the bracket 4 and constrained to a respective device (not illustrated) for moving the cable 6 itself for recovery and release of the bell 5, as well as a supporting rod 7, which can be inserted within the bracket 4 through the passage 43, and in turn comprises a top portion 71 constrained to the cable 6 and a bottom portion 72, which is connected to the bell 5.

The rod 7 extends longitudinally along a respective axis 7a, and moreover comprises, between the top portion 71 and the bottom portion 72, an intermediate shaped portion 73, which is tapered towards the top portion 71 by means of a conical surface 74 and has an external diameter Φ1, which defines the maximum dimensions of the rod 7 transverse to the axis 7a and has dimensions substantially similar to the minimum dimensions by an angle α inside the passage 43 in such a way as to set the rod 7 in a clearly defined position within the bracket 4 when the wheel 2 is in its housing position.

Finally, the rod 7 is provided with a cylindrical undercut 75 extending on the outside of almost the entire bottom portion 72 and defining along the bottom portion 72 itself a shoulder 76. The bottom portion 72 is moreover provided with an internal seat (not illustrated) and a screw 77 inserted within the seat itself and having a head 78 with an external diameter Φ2 of dimensions substantially equal to the dimensions of an external diameter Φ3 of the shoulder 76 and of dimensions at the most equal to the dimensions of the diameter Φ1.

The unit 1 moreover comprises a clamping and safety device 8, which is designed to clamp the bell 5 in its housing position and in turn comprises a pawl-and-ratchet mechanism 81, which is set inside the bracket 4 and can be operated from outside by means of a cable 82, and a grooved shaft 83, which is provided along the top portion 71 of the rod 7 and is kinematically connected to the pawl-and-ratchet mechanism 81 to enable clamping of the wheel 2 in its housing position, as well as free recovery of the wheel 2 itself, and prevent, instead, accidental descent of the wheel 2.

The grooved shaft 83 is defined by a plurality of circumferential grooves 84 transverse to the axis 7a and by a plurality of shaped annular teeth 85, which are alternated to the grooves 84 and are set at equal distances apart from one another by a given pitch P. The annular teeth 85 have an external diameter Φ4 of dimensions smaller than the dimensions of the diameter Φ1, and the tooth 85 of the top portion 71 closest to the intermediate portion 73 is radiused to the intermediate portion 73 itself by the surface 74.

The pawl-and-ratchet mechanism 81 comprises a gear 86, which is mounted within the bracket 4 to turn about an axis 86a of its own transverse to the axis 7a and meshes with the shaft 83, and a catch or pawl 87, which is mounted within the bracket 4 to turn about an axis 87a of its own transverse to the axis 7a and parallel to the axis 86a and can be selectively operated against the action of a torsion spring 88 sharing the axis 87a between an active position of release (not illustrated), in which it is released from the gear 86, and a passive blocking position (illustrated in Figure 1), in which it prevents any rotation of the gear 86 by exploiting the weight itself of the spare wheel 2.

In particular, the pawl 87 comprises two arms 871 and 872, which branch off in substantially opposite directions from the axis 87a and of which the arm 871 has an end 871a of its own constrained to the gear 86 in a position diametrally opposite to the grooved shaft 83, and the arm 872 has an end 872a of its own facing, on one side, the bracket 4 and connected, on the opposite side, to the cable 2.

When the pawl 87 is set in its passive blocking position, the end 871a is not only pushed by the elastic action of the spring 88 against the gear 86 between two consecutive teeth 861 of the gear 86 itself, but remains constrained between the two teeth 861 themselves by virtue of the positioning with respect to one another of the axes 7a, 86a and 87a, as a result of the conformation of the arm 871, and in such a way as to exert a resistant torque equal and opposite to a torque that is exerted by the grooved shaft 83 on the gear 86 itself and is proportional to the weight of the spare wheel 2. Furthermore, with the pawl 87 set in its own passive blocking position, the end 872a sets itself up against a wall 44 of the bracket 4, in effect preventing any further rotation of the pawl 87 about its own axis 87a, i.e., in effect preventing any possibility of the end 871a being released from the teeth 861.

Instead, when the pawl 87 is set in its own active position of release by acting on the cable 84 against the action of the spring 88, the end 872a is moved away from the wall 44, and, above all, the end 871a is disengaged from the teeth 861, thus enabling free rotation of the gear 86, i.e., descent of the spare wheel 2.

During descent of the bell 5, the pawl 87 must be kept in its own active position of release by continuing to act on the cable 82, whereas, during recovery of the bell, the pawl 87 may be left in its passive blocking position given that the only rotation of the gear 86 that the pawl 87 prevents is the rotation that enables descent of the bell 5, whereas rotation of the gear 86 during recovery occurs with the teeth 861 that strike against the end 871a and cause oscillation of the pawl 87 about the axis 87a and against the action of the spring 88.

It should be pointed out that what has just been described clearly shows that the clamping and safety device 8 exerts its functions of clamping and safety, without any external aid and, above all, both by simply exploiting the weight of the spare wheel 2 and by using components that are very simple and inexpensive to produce.

Finally, the unit 1 comprises a connection device 9, which connects the bell 5 to the supporting rod 7 so enabling the bell 5 itself to slide axially along the rod 7.

The device 9 comprises an.annular resting edge 51, which is made at a top portion of the bell 5 and is engaged by the bottom portion 72 to slide axially along the undercut 75, and an elastic engagement element 91, which is also set around the bottom portion 72 and within the undercut 75 and is compressed between the head 78 and the edge 51 to push the edge 51 against the shoulder 76.

In the embodiment illustrated herein, the elastic engagement element 91 is defined by a helical spring, which rests on the head 78 and functions in turn as resting element for the edge 51, on the one hand preventing the bell 5 from sliding off the rod 7 and, on the other, enabling the bell 5 itself to slide along the rod 7, i.e., within the undercut 75, not freely, but only under the control of the elastic action exerted by the helical spring itself.

The possibility of releasing the rod 7 and the bell 5 from one another renders the unit 1 less rigid and less subject to possible failure, and the presence of the elastic element 91 enables use of the device 8 described above irrespective of the dimensions of the shoulders of the tyres. In fact, from what has been described above, it is clear that the device 8 enables a spare wheel 2 to be clamped and set in a condition of safety according to discrete intervals of recovery and clamping controlled by the pitch P of the grooved shaft. Since, however, the shoulders of the tyre have a radius of curvature of dimensions that are difficult to know beforehand and dimensions that can vary within a range that is substantially not comparable with the pitch P, i.e., smaller than the pitch P, the presence of the connection device 9 enables said pitch P to be rendered independent of the dimensions of the radiuses of curvature; i.e., it enables an ample use of the unit 1 described above.

The elastic engagement element 91 does not necessarily have to be a helical spring, but can also be defined by any elastic clamping element designed to support the weight of a spare wheel 2 in such a way as to keep the edge 51 and the head 78 at a given distance from one another, i.e., in such a way as to enable the edge 51 to approach or recede from the head 78 according to the possible difference between the effective radius of curvature of the shoulder of the tyre and the ideal radius of curvature according to which the pitch P, the length of the rod 7, and the dimensions of the bell 5 have been calculated in the design stage.

In the example of embodiment illustrated in Figure 1, the edge 51 is set transverse to the axis 7a of the rod 7 and is inserted within the undercut 75 to be pushed by the elastic element 91 against the shoulder 76. In fact, in this embodiment, the edge 51 has an internal diameter Φ5 of dimensions smaller than the diameter Φ3 and of dimensions greater than the dimensions of a diameter Φ6 of the undercut 75.

Instead, in the embodiment of the alternative unit 1 illustrated in Figure 2 and designated by 1', the edge 51 is defined by a cylindrical edge sharing the axis 7a and is fitted around the shoulder 76. In fact, in this second embodiment, the internal diameter Φ5 of the edge 51 is of dimensions greater than the diameter Φ3 of the shoulder 76. Said second embodiment increases even further the flexibility of use of the unit 1.

It is understood that the innovation is not limited to the embodiment described and illustrated herein, which is to be considered as just one example of embodiment of the unit for supporting an external spare wheel, which may, instead, undergo further modifications as regards shapes and arrangements of parts and details of construction and assembly.

## Claims

1. A unit (1)(1') for supporting an external spare wheel (2), the unit (1)(1') being designed to support the spare wheel (2) underneath a structure (3) of the vehicle, and comprising:
- a box-type bracket (4) anchored to the structure (3) ;
- a bell (5), which can be coupled to the spare wheel (2) and can be moved with respect to the bracket (4) from and into a housing position, in which the spare wheel (2) is set up against the structure (3);
- a supporting rod (7), which is connected to the bell (5) and can be inserted within the box-type bracket (4) when the spare wheel (2) is in its housing position; and
- a clamping and safety device (8), which is designed to clamp the bell (5) in its housing position,
the unit (1)(1') being **characterized in that** the clamping and safety device (8) in turn comprises a pawl-and-ratchet mechanism (81), which is set inside the box-type bracket (4) and can be operated from outside, and a grooved shaft (83) with circumferential grooves (18), which is provided along said rod (7) for supporting the bell (5) and is kinematically connected to the pawl-and-ratchet mechanism (81) to enable clamping of the spare wheel (2) in its housing position, as well as free recovery of the spare wheel (2) itself, and prevent, instead, accidental descent of the spare wheel (2).

2. The unit according to Claim 1, **characterized in that** the pawl-and-ratchet mechanism (81) comprises a gear (86), which is rotatably mounted within the box-type bracket (4) and meshes with said grooved shaft (83), and a pawl, which is mounted within the box-type bracket (4) and can be selectively operated between an active position of release, in which it is released from the gear (2), and a passive blocking position, in which a first end thereof (871a) is constrained in the gear (2) and a second end thereof (872a) is set up against the box-type bracket (4), preventing any release of the first end from the gear (2) itself.

3. The unit according to Claim 2, **characterized in that** the clamping and safety device (8) comprises a centring collar (42) set at a mouth (41) of said box-type bracket (4) and slidably engaged by said supporting rod (7) to define a unique position of meshing between the pawl-and-ratchet mechanism (81) and the grooved shaft (83).

4. The unit according to Claim 3, **characterized in that** it moreover comprises a connection device (9), which slidably connects the bell (5) to the supporting rod (7), and is provided with an engagement element (91) set between a bottom end (78) of the supporting rod (7) and a resting edge (51) of the bell (5).

5. The unit according to Claim 4, **characterized in that** the circumferential grooves of the grooved shaft are set at equal distances apart from one another with a given pitch, and **in that** said engagement element (91) is defined by an elastic element compressed between said bottom end (78) of the supporting rod (7) and said resting edge (51) of the bell (5).

6. The unit according to Claim 5, **characterized in that** said engagement element (91) is a spring-type damping element.

7. The unit according to Claim 5 or Claim 6, **characterized in that** said resting edge (51) is defined by a circular edge set transverse to a longitudinal axis (7a) of said supporting rod (7) and inserted within a cylindrical seat (75) made along the supporting rod (7) itself.

8. The unit according to Claim 5 or Claim 6, **characterized in that** said resting edge (51) is defined by a cylindrical edge coaxial to a longitudinal axis of said supporting rod (7) and fitted along the supporting rod (7) itself.

## Patentansprüche

1. Einheit (1) (1') zur Abstützung eines außen angebrachten Reserverades (2), wobei die Einheit (1) (1') dazu ausgebildet ist, das Reserverad (2) unterhalb einer Struktur (3) des Fahrzeugs abzustützen, und umfasst:
- eine kastenförmige Halterung (4), die an der Struktur (3) verankert ist;
- eine Glocke (5), welche mit dem Reserverad (2) gekoppelt werden kann und bezüglich der Halterung (4) in eine Aufnahmeposition, in welcher das Reserverad (2) an der Struktur (3) anliegt, und von dieser Position weg bewegt werden kann;
- eine Stützstange (7), welche mit der Glocke (5) verbunden ist und in die kastenförmige Halterung (4) eingeführt werden kann, wenn das Reserverad (2) sich in seiner Aufnahmeposition befindet; und
- eine Klemm- und Sicherheitsvorrichtung (8), welche dazu ausgebildet ist, die Glocke (5) in ihrer Aufnahmeposition festzuklemmen,
wobei die Einheit (1) (1') **dadurch gekennzeichnet ist, dass** die Klemm- und Sicherheitsvorrichtung (8) ihrerseits umfasst: ein Gesperre (81), welches innerhalb der kastenförmigen Halterung (4) angebracht ist und von außen betätigt werden kann, und eine Nutwelle (83) mit in Umfangsrichtung verlaufenden Nuten (18), welche entlang der Stange (7) zum Abstützen der Glocke (5) vorgesehen ist und kinematisch mit dem Gesperre (81) verbunden ist, um ein Festklemmen des Reserverades (2) in seiner Aufnahmeposition sowie ein freies Abnehmen des Reserverades (2) selbst zu ermöglichen und andererseits ein unbeabsichtigtes Herabfallen des Reserverades (2) zu verhindern.

2. Einheit nach Anspruch 1, **dadurch gekennzeichnet, dass** das Gesperre (81) umfasst: ein Zahnrad (86), welches innerhalb der kastenförmigen Halterung (4) drehbar gelagert ist und mit der Nutwelle (83) im Eingriff steht, und eine Klinke, welche innerhalb der kastenförmigen Halterung (4) angebracht ist und selektiv zwischen einer aktiven Löseposition, in welcher sie von dem Zahnrad (86) gelöst ist, und einer passiven Sperrposition, in welcher ein erstes Ende von ihr (871a) in das Zahnrad (86) eingerastet ist und ein zweites Ende von ihr (871b) an der kastenförmigen Halterung (4) anliegt, wodurch jedes selbsttätige Lösen des ersten Endes aus dem Zahnrad (86) verhindert wird, betätigt werden kann.

3. Einheit nach Anspruch 2, **dadurch gekennzeichnet, dass** die Klemm- und Sicherheitsvorrichtung (8) einen Zentrierbund (42) umfasst, der sich an einer Mündung (41) der kastenförmigen Halterung (4) befindet und mit der Stützstange (7) in Gleiteingriff steht, um eine eindeutige Position des Eingriffs zwischen dem Gesperre (81) und der Nutwelle (83) zu definieren.

4. Einheit nach Anspruch 3, **dadurch gekennzeichnet, dass** sie außerdem eine Verbindungsvorrichtung (9) umfasst, welche die Glocke (5) gleitend mit der Stützstange (7) verbindet und mit einem Eingriffselement (91) versehen ist, das sich zwischen einem unteren Ende (78) der Stützstange (7) und einem Stützrand (51) der Glocke (5) befindet.

5. Einheit nach Anspruch 4, **dadurch gekennzeichnet, dass** die in Umfangsrichtung verlaufenden Nuten der Nutwelle in gleichen Abständen voneinander mit einem gegebenen Mittenabstand angeordnet sind, und dass das Eingriffselement (91) durch ein elastisches Element definiert ist, das zwischen dem unteren Ende (78) der Stützstange (7) und dem Stützrand (51) der Glocke (5) zusammengedrückt wird.

6. Einheit nach Anspruch 5, **dadurch gekennzeichnet, dass** das Eingriffselement (91) eine Dämpfungselement vom Typ einer Feder ist.

7. Einheit nach Anspruch 5 oder Anspruch 6, **dadurch gekennzeichnet, dass** der Stützrand (51) durch einen kreisförmigen Rand definiert ist, der quer zu einer Längsachse (7a) der Stützstange (7) angeordnet ist und in einen zylindrischen Sitz (75) eingesetzt ist, der entlang der Stützstange (7) selbst ausgebildet ist.

8. Einheit nach Anspruch 5 oder Anspruch 6, **dadurch gekennzeichnet, dass** der Stützrand (51) durch einen zylindrischen Rand definiert ist, der koaxial zu einer Längsachse der Stützstange (7) ist und entlang der Stützstange (7) selbst anliegend angebracht ist.

## Revendications

1. Unité (1)(1') permettant de supporter une roue de secours (2) externe, l'unité (1)(1') étant conçue pour supporter la roue de secours (2) en dessous d'une structure (3) du véhicule, et comprenant :
- un caisson support (4) ancré à la structure (3) ;
- une cloche (5), qui peut être couplée à la roue de secours (2) et peut être déplacée par rapport au support (4) depuis et dans une position de logement, où la roue de secours (2) est établie contre la structure (3) ;
- une tige de support (7), qui est raccordée à la cloche (5) et peut être insérée dans le caisson support (4) lorsque la roue de secours (2) est dans sa position de logement ; et
- un dispositif de serrage et de sécurité (8), qui est conçu pour serrer la cloche (5) dans sa position de logement,
l'unité (1)(1') étant **caractérisée en ce que** le dispositif de serrage et de sécurité (8) comprend lui-même un mécanisme d'encliquetage (81), qui est établi à l'intérieur du caisson support (4) et peut être actionné depuis l'extérieur, et un arbre rainuré (83) comportant des rainures circonférentielles (18), qui est disposé le long de ladite tige (7) pour supporter la cloche (5) et est cinématiquement raccordé au mécanisme d'encliquetage (81) pour permettre un serrage de la roue de secours (2) dans sa position de logement, ainsi qu'une récupération libre de la roue de secours (2) elle-même et empêcher, en revanche, une chute accidentelle de la roue de secours (2).

2. Unité selon la revendication 1, **caractérisée en ce que** le mécanisme d'encliquetage (81) comprend un engrenage (86), qui est monté avec faculté de rotation au sein du caisson support (4) et s'engrène avec ledit arbre rainuré (83), et un cliquet, qui est monté au sein du caisson support (4) et peut être sélectivement actionné entre une position active de libération, dans laquelle il est libéré de l'engrenage (2), et une position de blocage passive, dans laquelle une première extrémité (871a) de celui-ci est contrainte dans l'engrenage (2) et une seconde extrémité (872a) de celui-ci est établie contre le caisson support (4), empêchant toute libération de la première extrémité depuis l'engrenage (2) lui-même.

3. Unité selon la revendication 2, **caractérisée en ce que** le dispositif de serrage et de sécurité (8) comprend un collier de centrage (42) placé au niveau d'un bec (41) dudit caisson support (4) et enclenché avec faculté de coulissement par ladite tige de support (7) pour définir une position unique d'engrenage entre le mécanisme d'encliquetage (81) et l'arbre rainuré (83).

4. Unité selon la revendication 3, **caractérisée en ce qu'**il comprend en outre un dispositif de raccordement (9), qui raccorde avec faculté de glissement la cloche (5) et la tige de support (7), et est pourvu d'un élément d'enclenchement (91) placé entre une extrémité inférieure (78) de la tige de support (7) et un bord de repos (51) de la cloche (5).

5. Unité selon la revendication 4, **caractérisée en ce que** les rainures circonférentielles de l'arbre rainuré sont établies à des distances égales les unes des autres avec un pas donné, et **en ce que** ledit élément d'enclenchement (91) est défini par un élément élastique comprimé entre ladite extrémité inférieure (78) de la tige de support (7) et ledit bord de repos (51) de la cloche (5).

6. Unité selon la revendication 5, **caractérisée en ce que** ledit élément d'enclenchement (91) est un élément d'amortissement de type ressort.

7. Unité selon la revendication 5 ou la revendication 6, **caractérisée en ce que** ledit bord de repos (51) est défini par un bord circulaire placé transversalement à un axe longitudinal (7a) de ladite tige de support (7) et inséré dans un siège cylindrique (75) pratiqué le long de la tige de support (7) elle-même.

8. Unité selon la revendication 5 ou la revendication 6, **caractérisée en ce que** ledit bord de repos (51) est défini par un bord cylindrique coaxial avec un axe longitudinal de ladite tige de support (7) et ajusté le long de la tige de support (7) elle-même.
